# EUROPÄISCHE PATENTANMELDUNG

(11) **EP 0 540 912 A1**
(43) Veröffentlichungstag der Anmeldung: **12.05.1993**
(21) Anmeldenummer: 92117528.7
(22) Anmeldetag: 14.10.1992
(51) Int. Cl.: A01B 71/06, B60D 1/50

(54) **Vorrichtung zum Verbinden eines landwirtschaftlichen Gerätes mit einem Traktor**

(30) Priorität: 06.11.1991 DE 4136492
(71) Anmelder: GKN Walterscheid GmbH, D-53797 Lohmar (DE)
(72) Erfinder: Roth, Andreas, W-5206 Neunkirchen-Seelscheid 1 (DE)
(74) Vertreter: Harwardt, Günther, Dipl.-Ing.

(57) **Zusammenfassung**

Die Erfindung betrifft eine Vorrichtung zum Verbinden eines landwirtschaftlichen Gerätes (2) mit dem ihn ziehenden und über eine Zapfwelle (10) antreibenden Traktor (1). Sie umfaßt ein Doppelgetriebe (8). Dieses besteht aus zwei übereinander angeordneten Winkelgetrieben (15),(16), die gegeneinander über eine Lagerung (21) um eine erste Achse A-A verschwenkbar sind. Dem Doppelgetriebe (8) ist ein Haltebügel (9) und eine daran über Federn (42,43) abgestützte Stütze (36) zugeordnet. Diese weist einen Lagerzapfen (26) aufweist, mit dem sie um eine Achse C-C mit einer Traverse (7) schwenkbar verbunden ist. Die Traverse (7) dient der Befestigung des Gerätes (2) an den Fanghaken (4) der Unterlenker (3) des Traktors (1). Diese erlauben eine Schwenkbewegung um die Achse B-B. Durch die Stütze (36) wird eine verbesserte Kraftaufnahme bei Stößen erzielt.

## Beschreibung

Die Erfindung betrifft eine Vorrichtung zum Verbinden eines landwirtschaftlichen Gerätes mit dem ihn ziehenden und über eine Zapfwelle antreibenden Traktor, mit einem Doppelgetriebe, bestehend aus zwei übereinander angeordneten und gegeneinander über eine Lagerung um eine erste Achse verschwenkbaren und drehmäßig verbundenen Winkel getrieben, wobei ein Winkelgetriebe einen Antriebszapfen zur Verbindung mit der Zapfwelle des Traktors über eine Antriebswelle und das andere Winkelgetriebe einen dazu parallelen Abtrieb zur Weiterleitung der Drehbewegung an das Gerät aufweist, mit einer Traverse, an der das Doppelgetriebe befestigt ist und die zur schwenkbaren Verbindung des Doppelgetriebes mit den Unterlenkern des Traktors um eine die erste Achse mit Abstand in einem rechten Winkel kreuzenden zweiten Achse dient, mit Mitteln zur Verbindung des Doppelgetriebes mit dem Gerät und mit Mitteln, die ein Verschwenken des Gerätes um eine dritte Achse, die jeweils die beiden anderen Achsen kreuzt, zulassen.

Eine solche Ausbildung ist in der EP 0 027 295 B1 beschrieben. Dabei ist auch eine Schwenkverbindung um eine dritte Achse vorgesehen, die eine Schwenkung des angehängten Gerätes im Gelände im wesentlichen um eine Achse, die parallel zur Traktorlängsachse verläuft, zulassen soll. Die Schwenkachse wird von dem Antriebszapfen des Doppelgetriebes dargestellt. Da die Geräteverbindung beim Fahren im Gelände oder auch auf der Straße, Stößen, die aus Unebenheiten resultieren, unterliegt, folgt eine hohe Beanspruchung dieser Lagerung. Die Stöße werden ungefiltert und ungedämpft in die Lagerung des mit dem Antriebszapfen verbundenen Kegelrades eingeleitet.

Der Erfindung liegt die Aufgabe zugrunde, eine Anhängung mit einem Doppelgetriebe vorzuschlagen, bei der die Weiterleitung des Drehmomentes und die sich drehenden Antriebsteile weitestgehend von Stößen, die aus dem Fahrbetrieb der Gerätekombination resultieren, freigehalten werden.

Diese Aufgabe wird erfindungsgemäß dadurch gelöst, daß das Doppelgetriebe mit der Traverse um eine die erste Achse mit Abstand rechtwinkelig kreuzende Federachse gegen Federkraft begrenzt verschwenkbar verbunden ist.

Von Vorteil ist, daß die aufgrund der Bewegungen der Geräte-Traktor-Kombination entstehenden Stöße nur gedämpft an die Bauteile des Getriebes weitergeleitet werden.

In weiterer Ausgestaltung ist vorgesehen, daß zur Verbindung mit der Traverse eine Stütze vorhanden ist, die um die Federachse begrenzt schwenkbar mit einem der Bauteile des Doppelgetriebes verbunden und gegen dieses über eine Feder abgestützt ist.

Vorzugsweise ist vorgeschlagen, daß die Traverse an einer Seite der Stütze und die Feder zur anderen Seite der Stütze angeordnet ist.

Als Federn werden bevorzugt Zug- oder Druckfedern vorgesehen. Diese können als Schraubenfedern oder Tellerfedern, als nachgiebiger Gummi- oder Kunststoffblock oder als Blattfedern gestaltet sein.

Um zusätzlich eine Einstellung des Gerätes gegenüber dem Traktor um eine dritte Achse zu erzielen, ist vorgesehen, daß die Stütze mit der Traverse um eine dritte Achse, die die Federachse rechtwinklig kreuzt, schwenkbar verbunden ist.

Die Stütze kann nach einer ersten Variante unmittelbar mit einem der Gehäuse eines der beiden Winkelgetriebe verbunden sein. Alternativ ist eine Gestaltung derart möglich, daß die Stütze mit dem Doppelgetriebe unter Zwischenschaltung eines Haltebügels, demgegenüber zumindest eines der beiden Winkelgetriebe um die erste Achse verschwenkbar ist, verbunden ist.

Bevorzugte Ausführungsbeispiele der Erfindung sind in der Zeichnung schematisch dargestellt.

Es zeigt
- Figur 1: eine Seitenansicht auf einen Traktor mit dem über die erfindungsgemäße Vorrichtung angehängten Gerät,
- Figur 2: eine Draufsicht zu Figur 1 und
- Figur 3: eine Ansicht des Doppelgetriebes mit Blickrichtung auf die Stütze,
- Figur 4: eine geschnittene Seitenansicht des Doppelgetriebes mit Traverse und
- Figur 5: eine Seitenansicht ähnlich Figur 4 für eine geänderte Anlenkung der Stütze.

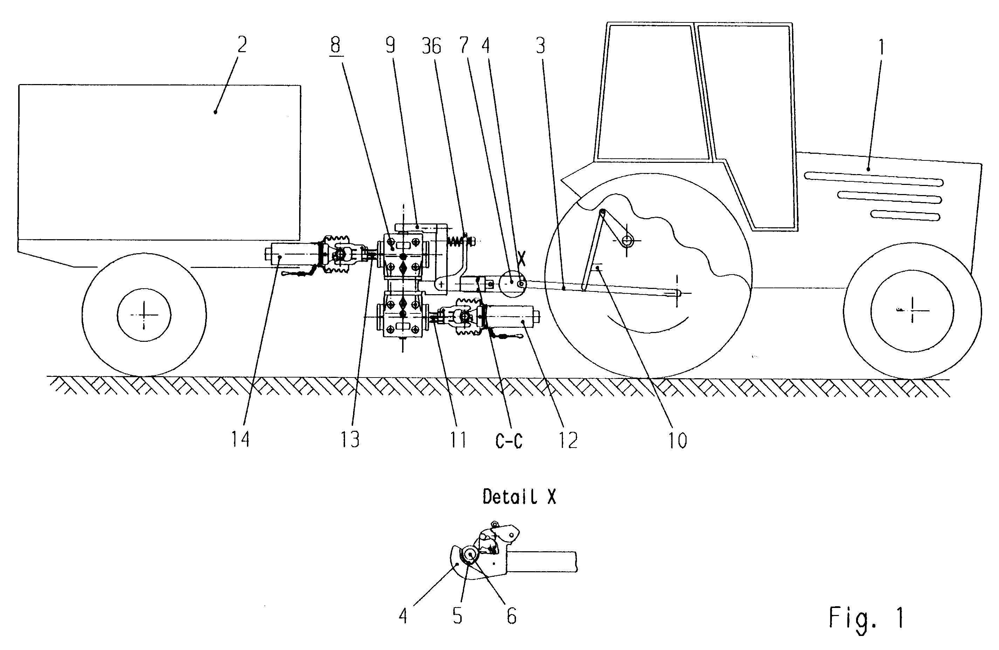

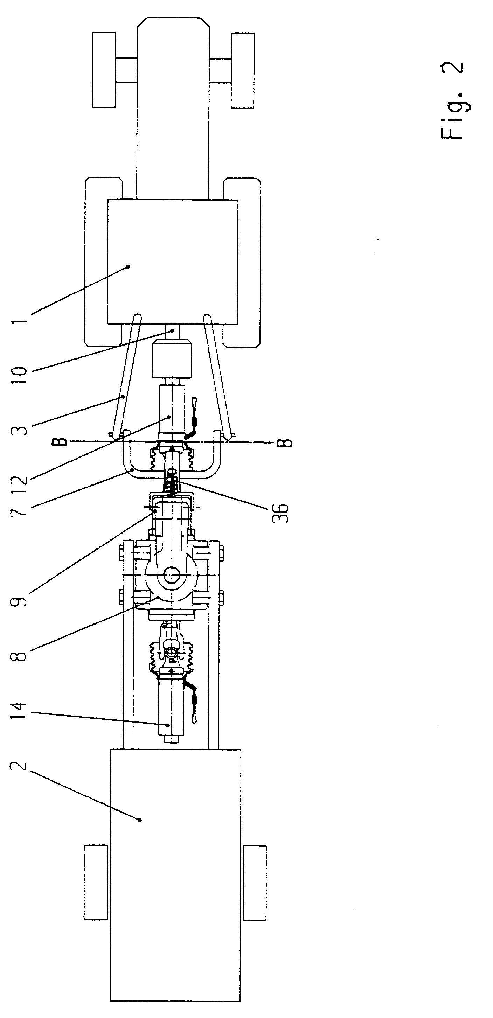

Aus den Figuren 1 und 2 ist erkennbar, daß an den Traktor 1 das Gerät 2 angehängt ist. Die Anhängung des Gerätes 2 erfolgt an die Unterlenker 3 des Traktors. Dem Gerät 2 ist ein Doppelgetriebe 8 zugeordnet, das mit einer Traverse 7 versehen ist, welche seitlich mit sich erstreckenden Zapfen 6 mit darauf angebrachten Kugeln als Zentrierelementen 5 versehen ist. Diese Kugeln 5 sind in den Fanghaken 4 der Unterlenker 3 des Traktors 1 zentriert aufgenommen. Sie lassen eine Verschwenkung der Traverse 7 um eine Achse B-B (s. Fig. 2) zu, welche quer zur Längsachse des Traktors 1 verläuft. Ferner ist erkennbar, daß von der Zapfwelle 10 des Traktors 1 die Drehbewegung über eine Antriebswelle 12 auf den Antriebszapfen 11 des Doppelgetriebes 8 weitergeleitet wird. Ferner weist das Doppelgetriebe 8 einen Abtriebszapfen 13 auf, der zum Antrieb des Gerätes 2 über eine Welle 14 dient. Das Doppelgetriebe 8 ist über einen Haltebügel 9 und einer daran abgefedert schwenkbar angebrachten Stütze 36 um die Achse C-C schwenkbeweglich mit der Traverse 7 verbunden.

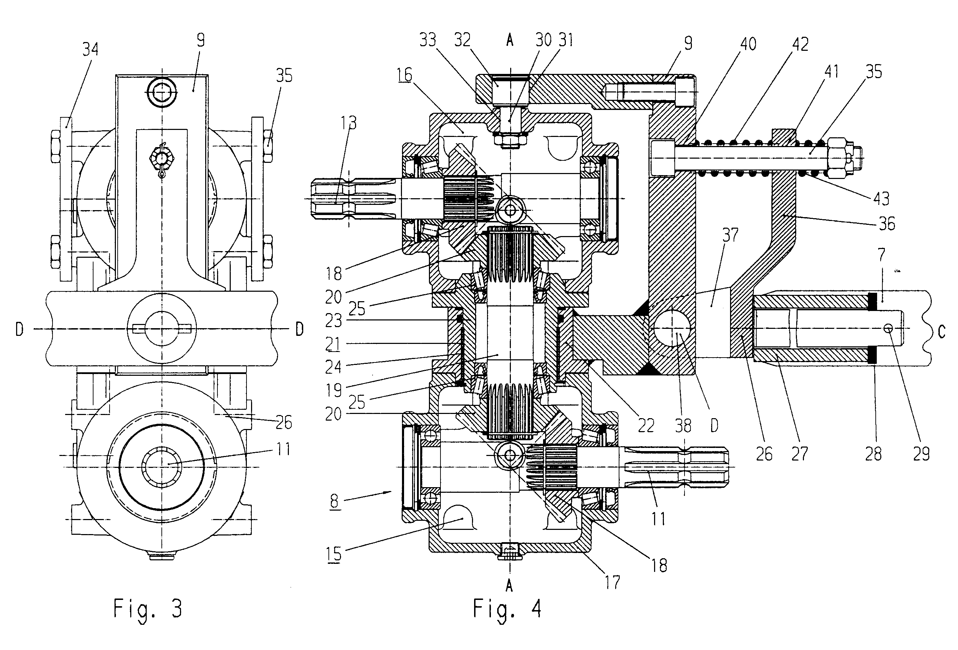

Aus den Figuren 1, 2 und insbesondere aus Figur 3 ist erkennbar, daß das Doppelgetriebe 8 aus zwei in Übereinanderanordnung befindlichen Winkelgetrieben 15, 16 besteht, von denen das Winkelgetriebe 15 die untere Position einnimmt. Die beiden Winkelgetriebe 15, 16 sind im wesentlichen identisch ausgebildet und miteinander über eine Lagerung 21 verbunden.

Beide Winkelgetriebe 15, 16 weisen jeweils ein Gehäuse 17 auf. Für das Winkelgetriebe 15 ist der Getriebeeingang der Antriebszapfen 11, der über die Zapfwelle 10 des Traktors 1 angetrieben wird. Der Antriebszapfen 11 ist über Lager im Gehäuse 17 gelagert. Er trägt das Kegelrad 18, das mit dem zweiten Kegelrad 20 kämmt. Dieses zweite Kegelrad 20 sitzt auf einer Zwischenwelle 19, welche an ihrem anderen Ende ein weiteres Zwischenkegelrad 20 trägt, das mit dem zum zweiten Winkelgetriebe 16 gehörenden Kegelrad 18, welches dem Abtriebszapfen 13 zugeordnet ist, in Eingriff ist. Die Zwischenwelle 19 ist in der Lagerung 21 aufgenommen. Die Lagerung 21 besteht aus dem äußeren Lagerelement 22, welches in einem Teilbereich hülsenförmig gestaltet ist und zum Gehäuse 17 des Winkelgetriebes 15 hin flanschartig ausgebildet ist und mit dem Gehäuse 17 fest verbunden ist. In der Bohrung des äußeren Lagerelementes 22 ist eine Lagerbuchse 24 aufgenommen, die günstige Reibeigenschaften aufweist und in welcher das innere, hülsenförmig mit einem Flansch gestaltete Lagerelement 23 drehbar gehalten ist. Das innere Lagerelement 23 ist fest mit dem Gehäuse 17 des zweiten Winkelgetriebes 16 verbunden. Die Zwischenwelle 19 ist über Kegelrollenlager 25 in dem inneren Lagerelement 23 drehbar aufgenommen. Das Gehäuse 17 des oberen Winkelgetriebes 16 ist mit Anschlußbohrungen versehen, die zur Befestigung des Gehäuses 17 an dem anzuhängenden Gerät 2 dienen. Hierzu wird beispielsweise das Getriebegehäuse 17 beidseitig von Laschen 34, die dem Gerät 2 zugeordnet sind, eingeschlossen. Die Festlegung erfolgt durch Schrauben 35. Am äußeren Lagerelement 22 ist der Haltebügel 9 fest, beispielsweise durch Schweißung angebracht. Der Haltebügel 9 ist als eine Art Winkelhebel gestaltet. Dessen abgewinkelter Schenkel besitzt eine Bohrung 31, deren Achse auf der ersten Achse A-A zentriert ist. In die Bohrung 31 ist ein Wälzlager 32 eingesetzt, das einen Stützzapfen 30 aufnimmt. Der Stützzapfen 30 ist in eine Bohrung 33 des Gehäuses 17 des Winkelgetriebes 16 eingesetzt und über einen Gewindezapfen mit Mutter am Gehäuse 17 festgelegt. An den Haltebügel 9 ist eine Stütze 36 schwenkbar um die Achse D-D angebracht. Hierzu stehen seitlich vom Haltebügel 9 Lagerzapfen 38 vor, auf welchen die Stütze 36 mit Bohrungen ihrer Lagerlaschen 37 schwenkbar aufgesetzt ist. Die Stütze 36 ist bei dem Ausführungsbeispiel gemäß Fig. 3 und 4 an ihrem freien Ende mit einer Bohrung 41 versehen. Ein mit Gewinde versehener Bolzen 39 ist durch eine Stufenbohrung im Haltebügel 40 hindurchgeführt und passiert ebenfalls die Bohrung 41 der Stütze 36. Zwischen der Außenfläche des Haltebügels 9 und der Stütze 36 ist auf den Bolzen 39 eine Druckfeder 42 aufgesetzt, die die Stütze 36 abfedert. Auf das aus der Stütze 36 herausgeführte Ende des Bolzens 39 ist eine weitere Druckfeder 43 aufgesetzt. Diese stützt sich einerseits an der Stütze 36 und andererseits an einer auf den Bolzen 39 geschraubten Mutter ab. Die Mutter ist auf dem Bolzen 39 gesichert.

Die Stütze 36 trägt einen Lagerzapfen 26, der in eine Bohrung der Lagerbuchse 27 eingesteckt ist. Die Lagerbuchse 27 ist Bestandteil der Traverse 7. Die Sicherung der Stütze 36 bzw. deren Zapfen 26 erfolgt der Lagerbuchse 27 gegenüber durch eine Sicherungsscheibe 28, die von einem den Lagerzapfen 26 durchsetzenden Sicherungsstift 29 gehalten ist.

Diese Lagerung erlaubt eine Verschwenkung des Gerätes 2 relativ zum Traktor 1 um eine im wesentlichen zur Traktorlängsachse parallel verlaufende Achse C-C.

Die abgefederte Stütze 36 erlaubt das Abfangen von Stößen im Arbeitsbetrieb oder Fahrbetrieb, die die Anhängung des Gerätes 2 an den Traktor 1 belasten.

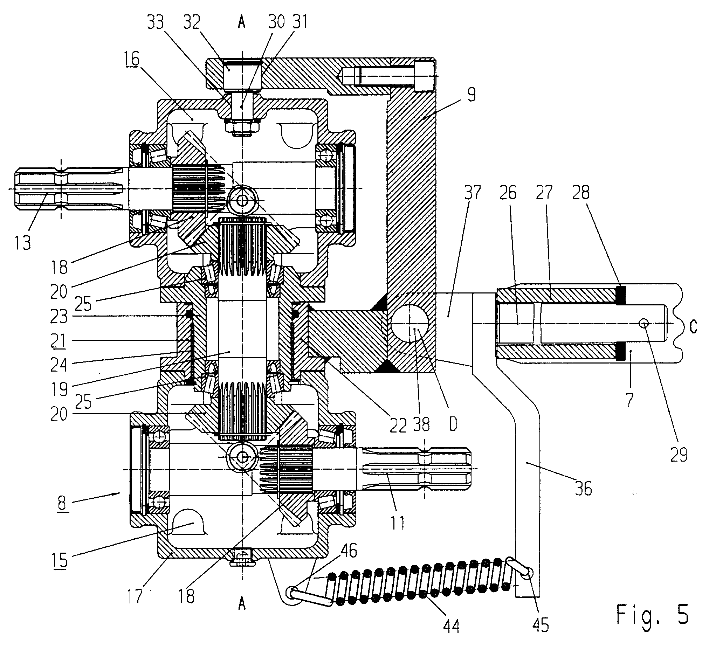

In Figur 5 ist eine alternative Anlenkung der Stütze 36 zu der gemäß Fig.4 dargestellt. Ansonsten entspricht der Aufbau des Doppelgetriebe 8 dem, gemäß den Figuren 3 und 4. Die Stütze 36 ist von der Schwenkachse D-D bzw. den Lagerzapfen 38 nach unten gerichtet. An ihrem freien Ende weist die Stütze 36 eine Einhängebohrung 45 auf. In diese ist eine Zugfeder 44 eingehängt, deren anderes Ende eine Einhängebohrung 46 eines an das Getriebegehäuse des unteren Winkelgetriebes 15 angebrachten Ansatzes durchgreift.

### Bezugszeichenliste

- 1: Traktor
- 2: Gerät
- 3: Unterlenker
- 4: Fanghaken
- 5: Kugel
- 6: Zapfen
- 7: Traverse
- 8: Doppelgetriebe
- 9: Haltebügel
- 10: Zapfwelle
- 11: Antriebszapfen
- 12: Antriebswelle
- 13: Abtriebszapfen
- 14: Welle
- 15, 16: Winkelgetriebe
- 17: Gehäuse
- 18: Kegelrad
- 19: Zwischenwelle
- 20: Zwischenkegelräder
- 21: Lagerung
- 22: äußeres Lagerelement
- 23: inneres Lagerelement
- 24: Lagerbuchse
- 25: Kegelrollenlager
- 26: Lagerzapfen
- 27: Lagerbuchse
- 28: Sicherungsscheibe
- 29: Sicherungsstift
- 30: Stützzapfen
- 31: Bohrung
- 32: Wälzlager
- 33: Bohrung
- 34: Lasche
- 35: Schrauben
- 36: Stütze
- 37: Lagerlasche
- 38: Lagerzapfen
- 39: Bohrung
- 40: Bohrung des Haltebügels
- 41: Bohrung der Stütze
- 42,43: Druckfedern
- 44: Zugfedern
- 45: Einhängebohrung
- 46: Einhängebohrung
- A-A: erste Achse
- B-B: zweite Achse
- C-C: dritte Achse
- D-D: Federachse

## Patentansprüche

1. Vorrichtung zum Verbinden eines landwirtschaftlichen Gerätes mit dem ihn ziehenden und über eine Zapfwelle antreibenden Traktor, mit einem Doppelgetriebe, bestehend aus zwei übereinander angeordneten und gegeneinander über eine Lagerung um eine erste Achse verschwenkbaren und drehmäßig verbundenen Winkelgetrieben, wobei ein Winkelgetriebe einen Antriebszapfen zur Verbindung mit der Zapfwelle des Traktors über eine Antriebswelle und das andere Winkelgetriebe einen dazu parallelen Abtrieb zur Weiterleitung der Drehbewegung an das Gerät aufweist, mit einer Traverse, an der das Doppelgetriebe befestigt ist und die zur schwenkbaren Verbindung des Doppelgetriebes mit den Unterlenkern des Traktors um eine die erste Achse mit Abstand in einem rechten Winkel kreuzenden zweiten Achse dient, mit Mitteln zur Verbindung des Doppelgetriebes mit dem Gerät und mit Mitteln, die ein Verschwenken des Gerätes um eine dritte Achse, die jeweils die beiden anderen Achsen kreuzt, zulassen,
dadurch gekennzeichnet,
daß das Doppelgetriebe (8) mit der Traverse (7) um eine die erste Achse (A-A) mit Abstand rechtwinkelig kreuzende Federachse (D-D) gegen Federkraft begrenzt verschwenkbar verbunden ist.

2. Vorrichtung nach Anspruch 1,
dadurch gekennzeichnet,
daß zur Verbindung mit der Traverse (7) eine Stütze (36) vorhanden ist, die um die Federachse (D-D) begrenzt schwenkbar mit einem der Bauteile des Doppelgetriebes (8) verbunden und gegen dieses über eine Feder (44) abgestützt ist.

3. Vorrichtung nach Anspruch 2,
dadurch gekennzeichnet,
daß die Traverse (7) an einer Seite der Stütze (36) und die Feder (44) zur anderen Seite der Stütze (36) angeordnet ist.

4. Vorrichtung nach einem der Ansprüche 1 bis 3,
dadurch gekennzeichnet,
daß die die Federkraft bewirkende Feder (42, 43) als Zug- oder Druckfeder ausgestaltet ist.

5. Vorrichtung nach einem der Ansprüche 1 bis 3,
dadurch gekennzeichnet,
daß die Stütze (36) mit der Traverse (7) um eine dritte Achse (C-C), die die Federachse (D-D) rechtwinklig kreuzt, schwenkbar verbunden ist.

6. Vorrichtung nach einem der Ansprüche 1 bis 3,
dadurch gekennzeichnet,
daß die Stütze (36) mit dem Doppelgetriebe (8) unter Zwischenschaltung eines Haltebügels (9), demgegenüber zumindest eines der beiden Winkelgetriebe um die erste Achse (A-A) verschwenkbar ist, verbunden ist.

7. Vorrichtung nach einem der Ansprüche 1 bis 5,
dadurch gekennzeichnet,
daß die Stütze (36) mit dem Gehäuse eines der beiden Winkelgetriebe des Doppelgetriebes begrenzt schwenkbar verbunden ist.
